# EUROPEAN PATENT APPLICATION

(11) **EP 2 669 246 A1**
(43) Date of publication of application: **04.12.2013**
(21) Application number: 13170086.6
(22) Date of filing: 31.05.2013
(51) Int. Cl.: C01B 3/08, H01M 8/06, B64D 41/00

(54) **System and method for providing electrical power**

(30) Priority: 31.05.2012 US 201213485657
(71) Applicant: General Electric Company, Schenectady, New York 12345 (US)
(72) Inventor: ZHOU, Zhi, Niskayuna, NY New York 12309 (US); PRESLEY, James Robert, Niskayuna, NY New York 12309 (US); DEMUTH, Russell Stephen, Niskayuna, NY New York 12309 (US); YIN, Ming, Niskayuna, NY New York 12309 (US)
(74) Representative: Williams, Andrew Richard

(57) **Abstract**

An electrical power unit (10) provides electrical power to an electrical component (12) on-board an aircraft (100). The electrical power unit (10) includes a hydrogen generation system (16) configured to be positioned on-board the aircraft. The hydrogen generation system is further configured to generate hydrogen using a reaction between water and metal. The electrical power unit also includes a fuel cell (14) configured to be positioned on-board the aircraft. The fuel cell is operatively connected to the hydrogen generation system such that the fuel cell receives hydrogen from the hydrogen generation system. The fuel cell is further configured to generate electrical power from the hydrogen received from the hydrogen generation system and to be electrically connected to the electrical component for supplying the component with electrical power.

## Description

### BACKGROUND

Some known aircraft include emergency power units (EPUs). The EPUs supply electrical power to electrical components of the aircraft upon failure of a primary power unit (PPU) and/or an auxiliary power unit (APU) of the aircraft. For example, upon failure the PPU and/or the APU, the EPU of some known aircraft supplies electrical power to electrical components that are critical and/or vital to safe operation of the aircraft, such as flight controls, linked hydraulics, instruments, avionics, and flight management systems, among others.

The EPUs of some known aircraft include ram air turbines that are deployed externally from the aircraft. Ram air turbines are wind turbines that generate electrical power from the air through which the aircraft moves during flight. But, ram air turbines may be relatively large and heavy, which may increase the cost of the EPU. Moreover, ram air turbines cannot be tested with passengers on-board the aircraft. Accordingly, an extra flight without passengers must be taken to test the ram air turbine. Because of the associated fuel and other costs of the extra flight, aircraft operators typically do not test the ram air turbines until the EPU is needed in an emergency situation. The reliability and performance of the EPU is therefore unknown such that the EPU may not be operational to supply any or a sufficient amount of electrical power during an emergency situation.

### BRIEF DESCRIPTION

In one embodiment, an electrical power unit provides electrical power to an electrical component on-board an aircraft. The electrical power unit includes a hydrogen generation system configured to be positioned on-board the aircraft. The hydrogen generation system is further configured to generate hydrogen using a reaction between water and metal. The electrical power unit also includes a fuel cell configured to be positioned on-board the aircraft. The fuel cell is operatively connected to the hydrogen generation system such that the fuel cell receives hydrogen from the hydrogen generation system. The fuel cell is further configured to generate electrical power from the hydrogen received from the hydrogen generation system and to be electrically connected to the electrical component for supplying the component with electrical power.

In another embodiment, a method is provided for providing electrical power on-board an aircraft. The method includes generating hydrogen on-board the aircraft using a reaction between water and metal, supplying the generated hydrogen to a fuel cell on-board the aircraft, and generating electrical power at the fuel cell using the generated hydrogen.

In another embodiment, an aircraft includes an airframe, an electrical component on-board the airframe, and a hydrogen generation system on-board the airframe. The hydrogen generation system is configured to generate hydrogen using a reaction between water and metal. The aircraft also includes a fuel cell on-board the airframe. The fuel cell is operatively connected to the hydrogen generation system such that the fuel cell receives hydrogen from the hydrogen generation system. The fuel cell is configured to generate electrical power from the hydrogen received from the hydrogen generation system. The fuel cell is electrically connected to the electrical component for supplying the component with electrical power.

### BRIEF DESCRIPTION OF THE DRAWINGS

Figure 1 is schematic illustration of an embodiment of an electrical power unit for an aircraft.
Figure 2 is a schematic illustration of an embodiment of a reactor of the electrical power unit shown in Figure 1.
Figure 3 is a schematic illustration of an embodiment of an aircraft.
Figure 4 is a flowchart illustrating an embodiment of a method for generating electrical power on-board an aircraft.

### DETAILED DESCRIPTION

The following detailed description of certain embodiments will be better understood when read in conjunction with the appended drawings. It should be understood that the various embodiments are not limited to the arrangements and instrumentality shown in the drawings.

As used herein, an element or step recited in the singular and proceeded with the word "a" or "an" should be understood as not excluding plural of said elements or steps, unless such exclusion is explicitly stated. Furthermore, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

Various embodiments of systems and methods described and/or illustrated herein provide electrical power, for example on-board an aircraft. At least one beneficial effect of various embodiments is an electrical power unit with real-time on-demand hydrogen (H) generation on-board an aircraft. At least one beneficial effect of various embodiments is an electrical power unit that is not externally deployed from an aircraft. At least one beneficial effect of various embodiments is an electrical power unit having a smaller size, having a lighter weight, having a higher power density, that is less complex, and/or that is less expensive than at least some known electrical power units, for example electrical power units that include fuel cells and/or ram air turbines. At least one beneficial effect of various embodiments is an electrical power unit having better reliability and/or performance than at least some known electrical power units, and/or an electrical power unit that reduces an amount of fuel being burned by, and/or an amount of emissions from, an aircraft.

Various embodiments of systems and methods are described and illustrated herein with respect to a fixed wing airplane. But, the various embodiments of systems and methods described and/or illustrated herein are not limited to airplanes or fixed wing aircraft. Rather, the various embodiments of systems and methods may be implemented within other types of aircraft having any other design, structure, configuration, arrangement, and/or the like, such as, but not limited to, aerostats, powered lift aircraft, and/or rotorcraft, among others.

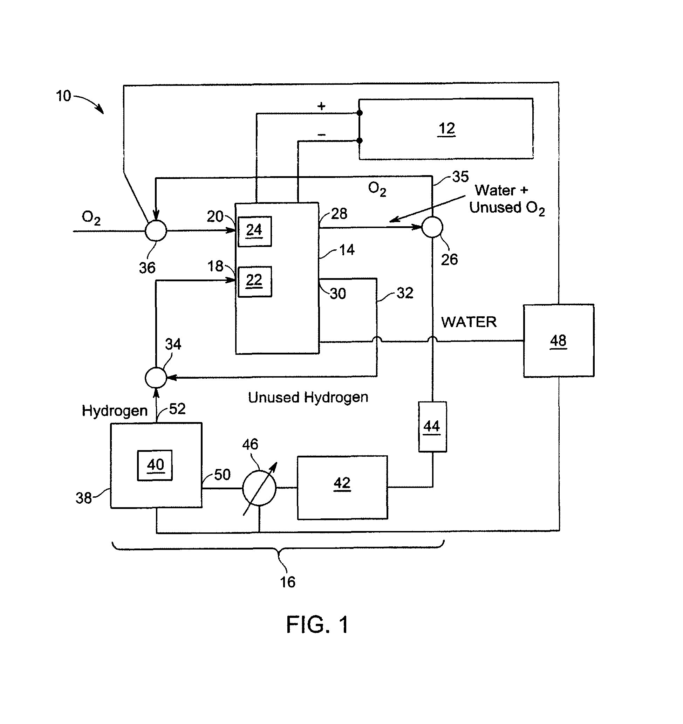

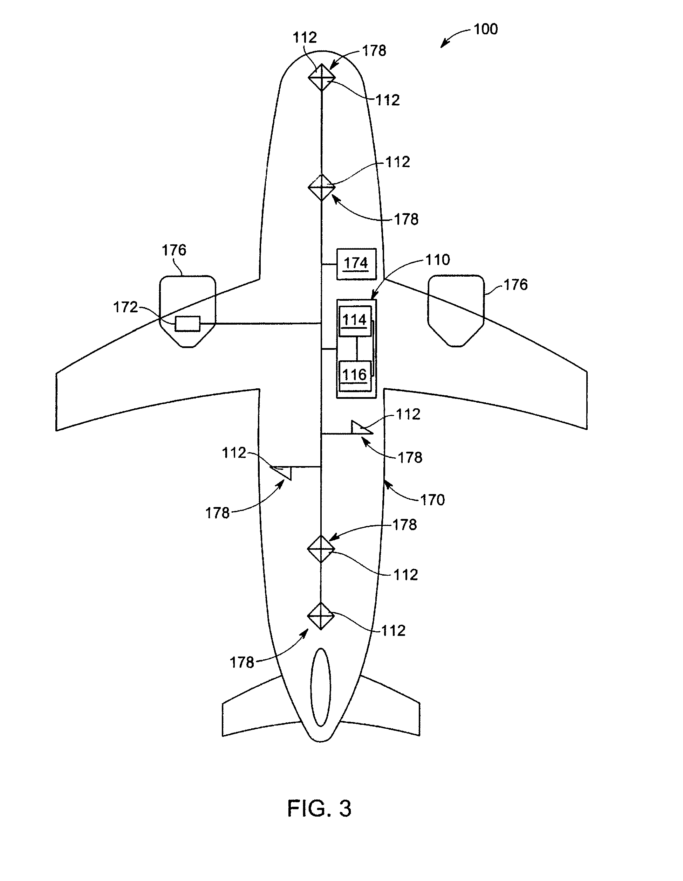

Figure 1 is schematic illustration of an embodiment of an electrical power unit 10 for an aircraft (e.g., the aircraft 100 shown in Figures 3). As will be described below, the electrical power unit 10 may be used to provide electrical power to one or more electrical components 12 that are located on-board the aircraft. For example, the electrical power unit 10 may be an emergency power unit (EPU) and/or an auxiliary power unit (APU) of the aircraft.

The electrical power unit 10 may be used to provide electrical power to any number of electrical components 12. For clarity, the electrical power unit 10 will be described and illustrated with reference to Figure 1 as providing electrical power to a single electrical component 12. Each electrical component 12 may be any type and quantity of electrical component, such as, but not limited to, flight controls, avionics, linked hydraulics, displays, instruments, sensors, galley ovens, heaters, refrigeration units, lighting, fans, de-ice and anti-ice systems, engine management systems, flight management systems, power distribution components, starters, starter-generators, environmental controls, pressurization systems, entertainment systems, microwaves, weapon systems, cameras, signal processors, power distribution components, capacitors, and/or electrical components that process, transmit, and/or relay data, among others.

The electrical power unit 10 includes a fuel cell 14 and a hydrogen generation system (HGS) 16. As will be described below, the HGS 16 generates hydrogen using a reaction between water (H₂O) and metal, and the fuel cell 14 generates electrical power using hydrogen that is generated by, and received from, the HGS 16. The fuel cell 14 is electrically connected to the electrical component 12 such that the fuel cell 14 is configured to supply the electrical component 12 with electrical power. In the illustrated embodiment, the fuel cell 14 is shown electrically connected to a single electrical component 12. But, the fuel cell 14 may be electrically connected to any number of electrical components 12. One or more electrical devices (not shown) may be electrically connected between the fuel cell 14 and the electrical component 12 for modifying the electrical power supplied from the fuel cell 14 to the electrical component 12. Examples of such electrical devices that may be electrically connected between the fuel cell 14 and the electrical component 12 include, but are not limited to, direct current (DC) to DC converters, alternating current (AC) to DC converters, DC to AC converters, transformers, amplifiers, phase converters, and/or the like.

The fuel cell 14 generates electrical power in a known manner using a reaction between hydrogen and oxygen (O₂). The fuel cell 14 includes a hydrogen inlet 18 and an oxygen inlet 20. The fuel cell 14 may be any type of fuel cell that generates electrical power using a reaction between hydrogen and oxygen. For example, in some embodiments, hydrogen is fed through the hydrogen inlet 18 to an anode 22 of the fuel cell 14, while oxygen is fed through the oxygen inlet 20 to a cathode 24 of the fuel cell 14. The hydrogen and oxygen travel through the fuel cell 14 and electrochemically react with each other to generate electrical power.

The fuel cell 14 may produce one or more byproducts from the electrochemical reaction between hydrogen and oxygen, such, as, but not limited to, water, unused oxygen, and/or the like. As will be described below, in some embodiments, water is produced as a byproduct of the fuel cell 14 and the byproduct water is fed to the HGS 16 for use in generating hydrogen. In the illustrated embodiment, the electrical power unit 10 includes a byproduct tank 26 that is fluidly connected to a byproduct outlet 28 of the fuel cell 14, for example for storing byproducts therein. Byproducts of the electrochemical reaction between hydrogen and oxygen within the fuel cell 14 may be stored in the byproduct tank 26 for any amount of time. In some embodiments, different byproducts are separated within the byproduct tank 26 (e.g., using a multi-outlet connection and/or the like) and/or stored separately within the byproduct tank 26. In some alternative embodiments, the electrical power unit 10 does not include the byproduct tank 26. For example, in some alternative embodiments, different byproducts are separated using a multi-outlet connector (not shown) in place of the byproduct tank 26. One example of using a multi-outlet connector in place of the by product tank 26 includes using a multi-outlet connector that includes an oxygen outlet that feeds unused oxygen to the oxygen inlet 20 and a water outlet that feeds byproduct water to another component (e.g., to the HGS 16).

In some embodiments, some hydrogen supplied to the fuel cell 14 is not consumed during the generation of electrical power. In other words, some of the hydrogen supplied to the fuel cell 14 may travel through the fuel cell 14 without reacting with oxygen. Unused hydrogen may be re-circulated from a hydrogen outlet 30 of the fuel cell 14 back to the hydrogen inlet 18, for example using a fluid conduit 32 that fluidly interconnects the hydrogen outlet 30 and the hydrogen inlet 18. The unused hydrogen is thereby re-introduced into the fuel cell 14 for use in generating more electrical power. In the illustrated embodiment, the electrical power unit 10 includes a hydrogen supply tank 34 that is fluidly interconnected between the hydrogen inlet 18 and the hydrogen outlet 30, for example for storing unused hydrogen during re-circulation thereof and/or for storing hydrogen generated by the HGS 16 for later supply to the fuel cell 14. When the hydrogen supply tank 34 holds both unused hydrogen and hydrogen generated by the HGS 16, the unused hydrogen and the hydrogen generated by the HGS 16 mix within the hydrogen supply tank 34. Unused hydrogen may be stored in the hydrogen supply tank 34 for any amount of time. In some alternative embodiments, the electrical power unit 10 does not include a tank that holds unused hydrogen. For example, in some alternative embodiments, unused hydrogen is mixed with hydrogen generated by the HGS 16 for being supplied to the hydrogen inlet 18 of the fuel cell 14 using any suitable mixing device (not shown) in place of the hydrogen supply tank 34, such as, but not limited to, a multi-inlet connector (e.g., a t-connector and/or the like) and/or the like. The mixing device may include one or more features that facilitate mixing of the unused hydrogen with the hydrogen generated by the HGS 16, such as, but not limited to, a venturi and/or the like. It should be understood that in embodiments wherein the electrical power unit 10 includes the hydrogen supply tank 34, the unit 10 may include a mixing device (whether within or external to the tank 34) that mixes the unused hydrogen with the hydrogen generated by the HGS 16.

The hydrogen used by the fuel cell 14 to generate electrical power is supplied to the fuel cell 14 by the HGS 16. The oxygen used by the fuel cell 14 to generate electrical power may be pure oxygen or may be a compound that includes oxygen (e.g., air). The oxygen used by the fuel cell 14 to generate electrical power may be supplied from any suitable supply thereof. For example, the electrical power unit 10 may include an oxygen supply tank 36 that holds a supply of oxygen (whether pure or within a compound). Another example of the oxygen used by the fuel cell 14 to generate electrical power includes using air surrounding the aircraft, using air from within a cabin of the aircraft, and/or the like.

Some oxygen supplied to the fuel cell 14 may not be consumed during the generation of electrical power. Specifically, some of the oxygen supplied to the fuel cell 14 may travel through the fuel cell 14 without reacting with hydrogen. Unused oxygen may be re-circulated back to the oxygen inlet 20. The unused oxygen is thereby re-introduced into the fuel cell 14 for use generating more electrical power. In the illustrated embodiment, unused oxygen exits the fuel cell 14 through the byproduct outlet 28 and is fed back to the oxygen inlet 20 through a fluid conduit 35 that is fluidly connects the byproduct outlet 28 to the oxygen inlet 20. Alternatively, the fuel cell 14 includes a dedicated oxygen outlet (not shown) through which unused oxygen exits the fuel cell 14.

In the illustrated embodiment, the byproduct tank 26 is configured to hold unused oxygen that has exited the fuel cell 14. The unused oxygen is separated from other byproducts, other elements, and/or other compounds contained within the byproduct tank 26 before being re-circulated to the oxygen inlet 20. In some alternative embodiments, the electrical power unit 10 includes a dedicated unused oxygen tank (not shown) for holding unused oxygen during re-circulation thereof. Moreover, in some alternative embodiments, the electrical power unit 10 does not include a tank that holds unused oxygen during re-circulation thereof. Unused oxygen may be stored in the byproduct tank 26 and/or the dedicated unused oxygen tank for any amount of time during re-circulation of the unused oxygen. Whether or not the electrical power unit 10 includes the byproduct tank 26 or a dedicated unused oxygen tank, unused oxygen that is re-circulated to the oxygen inlet 20 may be stored within the oxygen supply tank 36. When the oxygen supply tank 36 holds both unused oxygen and a supply of oxygen, the unused oxygen and the supply of oxygen mix within the oxygen supply tank 36. Unused oxygen may be stored in the oxygen supply tank 36 for any amount of time. In some alternative embodiments, the unused oxygen is not stored within the oxygen supply tank 36, but rather is mixed with the supply of oxygen from the tank 36 and/or another source using any suitable mixing device (not shown), such as, but not limited to, a multi-inlet connector (e.g., a t-connector and/or the like) and/or the like. The mixing device may include one or more features that facilitate mixing of the unused oxygen with the oxygen from the supply tank 36 and/or another source, such as, but not limited to, a venturi and/or the like. It should be understood that in embodiments wherein the oxygen supply tank 36 holds both a supply of oxygen and unused oxygen, the unit 10 may include a mixing device (whether within or external to the tank 36) that mixes the unused oxygen with the supply of oxygen from the supply tank 36 and/or another source.

As described above, the HGS 16 generates hydrogen using a reaction between water and metal. The HGS 16 includes a reactor 38 having a reaction chamber 40 wherein water and metal react to thereby generate hydrogen. The HGS 16 may include a water tank 42. In the illustrated embodiment, the reaction chamber 40 of the reactor 38 is fluidly connected to the water tank 42 such that the reaction chamber 40 is configured to receive water from the water tank 42. Moreover, in some embodiments, the water tank 42 is configured to receive byproduct water from the fuel cell 14. For example, in the illustrated embodiment, the water tank 42 is fluidly connected to the byproduct tank 26 for receiving byproduct water from the fuel cell 14. The byproduct water is separated from other byproducts, elements, and/or compounds contained within the byproduct tank 26 before being fed to the HGS 16. In some alternative embodiments, the water tank 42 does not receive byproduct water from the fuel cell 14, but rather the water tank 42 holds a supply of water for use by the reactor 38. Moreover, in some alternative embodiments, byproduct water from the fuel cell 14 is fed to the reactor 38 without being fed through the water tank 42. For example, in some alternative embodiments, the water tank 42 is not fluidly connected between the fuel cell 14 and the reactor 38 but is fluidly connected to the reactor 38 for supplying the reactor 38 with an initial amount of water to initiate the metal and water reaction.

In embodiments wherein byproduct water from the fuel cell 14 is fed to the reactor 38 for use generating hydrogen, the electrical power unit 10 may include a check valve 44 operatively connected in fluid communication to the byproduct outlet 28 of the fuel cell 14. The check valve 44 prevents byproduct water from flowing back into the fuel cell 14. Although only one check valve 44 is shown, the electrical power unit 10 may include any number of check valves.

Each flow valve 44 may have any location that enables the flow valve 44 to regulate the flow rate of byproduct water out of the fuel cell 14. In the illustrated embodiment, the flow valve 44 is operatively connected in fluid communication between the water tank 42 and the byproduct tank 26. Other exemplary locations of the flow valve 44 include, but are not limited to, a location within the water tank 42, a location within the byproduct tank 26, a location that is not in fluid communication between the water tank 42 and the byproduct tank 26, a location in fluid communication between the byproduct outlet 28 and the byproduct tank 26, a location in fluid communication between the water tank 42 and the reactor 38, and/or the like. Each flow valve 44 may be any type of valve that enables the flow valve 44 to regulate the flow rate of byproduct water out of the fuel cell 14.

The HGS 16 may include a pump 46 that is operatively connected in fluid communication with the reaction chamber 40 of the reactor 38 for supplying water to the reaction chamber 40. The pump 46 is configured to regulate the rate of flow of water into the reaction chamber 40. As the amount and/or rate of electrical power generated by the fuel cell 14 is related to the flow rate of hydrogen supplied to the fuel cell 14, the pump 46 can regulate the flow rate of water into the reaction chamber 40 to thereby provide a flow rate of hydrogen that corresponds to a desired amount and/or rate of electrical power generated by the fuel cell 14. In addition or alternative to the pump 46, the electrical power unit 10 may include one or more valves (not shown) and/or one or more other components (not shown) for regulating the flow rate of water to the reaction chamber 40. In the illustrated embodiment, the pump 46 is operatively connected in fluid communication between the water tank 42 and the reaction chamber 40 such that operation of the pump 46 moves water from the water tank 42 to the reaction chamber 38. Although only a single pump 46 is shown, the electrical power unit 10 may include any number of pumps 46. Each pump 46 may have any location that enables the pump 46 to move water to the reaction chamber 40 of the reactor 38. As described above, in the illustrated embodiment, the pump 46 is operatively connected in fluid communication between the water tank 42 and the reactor 38. Other exemplary locations of the pump 46 include, but are not limited to, a location within the water tank 42, a location within the reactor 38, a location that is not in fluid communication between the water tank 42 and the reactor 38, and/or the like. Each pump 46 may be any type of pump that enables the pump 46 to move water to the reaction chamber 40, such as, but not limited to, a positive displacement pump, an impulse pump, a hydraulic ram pump, a velocity pump, a centrifugal pump, an educator-jet pump, a gravity pump, a valve less pump, and/or the like.

The electrical power unit 10 may include one or more controllers 48 and/or other subsystems for controlling operation of the electrical power unit 10. For example, the controller 48 may control activation and deactivation of operation of the fuel cell 14, the HGS 16, the pump 46, one or more components of the fuel cell 14 and/or the HGS 16, and/or one or more other components of the electrical power unit 10. Moreover, and for example, the controller 48 may control operation of the fuel cell 14, the HGS 16, the pump 46, the oxygen supply tank 36, and/or one or more other components of the electrical power unit 10. The controller 48 may control various operations of the fuel cell 14, the pump 46, the oxygen supply tank 36, and/or the HGS 16, such as, but not limited to, the amount of hydrogen generated by the HGS 16, the rate at which hydrogen is generated by the HGS 16, the amount of electrical power generated by the fuel cell 14, the rate at which electrical power is generated by the fuel cell 14, and/or the like. Other examples of the controller 48 controlling operation of the fuel cell 14, the pump 46, the oxygen supply tank 36, and/or the HGS 16 include, but are not limited to, controlling the amount and/or flow rate of oxygen supplied to the fuel cell 14, controlling the amount and/or flow rate of hydrogen supplied to the fuel cell 14, controlling the amount and/or flow rate of water supplied to the reaction chamber 40, controlling the amount and/or type of metal supplied to the reaction chamber 40, controlling the amount and/or type of a catalyst supplied to the reaction chamber 40, and/or the like.

Other exemplary operations of the controller 48 include, but are not limited to, monitoring one or more sensors (not shown) that determine the amount and/or rate of electrical power generation, monitoring one or more sensors (not shown) that determine the amount and/or rate of hydrogen generation, controlling switches to control the flow of electrical power from the fuel cell to different electrical components 12, and/or the like. Other sensors may be integrated into the unit 10 to monitor hydrogen pressure, hydrogen temperature, hydrogen flow rate, water pressure, water temperature, water flow rate, oxygen pressure, oxygen flow rate, oxygen temperature, and/or the like within the electrical power unit 10.

Operation of the electrical power unit 10 to provide electrical power will now be described. The HGS 16 generates hydrogen for use by the fuel cell 14 to generate electrical power. The HGS 16 may generate hydrogen using any reaction between water and metal. The HGS 16 may use any metal (including any metallic compound) to generate hydrogen, such as, but not limited to, aluminum and/or the like. A catalyst may be used to promote the reaction between the water and the metal. Any suitable catalyst may be used. The reaction between the water and the metal to generate hydrogen is exothermic. Examples of suitable reactions between water and metal include, but are not limited to: 2AL + 6H₂O + catalyst = 2AL(OH) + 3H₂ + catalyst + heat (between approximately 15 °C and approximately 280 °C); 2AL + 4H₂O + catalyst = 2ALO(OH) + 3H₂ + catalyst + heat (between approximately 280 °C and approximately 480 °C); 2AL + 3H₂O + catalyst = AL₂O₃ + 3H₂ + catalyst + heat (above approximately 480 °C); and/or the like.

To generate the reaction, the metal, catalyst, and water are supplied to the reaction chamber 40 of the reactor 38. The water is supplied to the reaction chamber 40 through an inlet 50 of the reactor 38 that fluidly communicates with the reaction chamber 40. The metal, catalyst, and water may be supplied to the reaction chamber 40 in any order. In some embodiments, the metal is preloaded into the reaction chamber 40 before the water is supplied to the reaction chamber. In such embodiments wherein the metal is supplied to the reaction chamber 40 before the water, the catalyst may be mixed with the metal before the water is supplied to the reaction chamber 40, the catalyst may be mixed with the water before the water is supplied to the reaction chamber 40, or the catalyst may be supplied to the reaction chamber 40 after the water has been supplied to the reaction chamber 40. Each of the metal and the catalyst may be supplied to the reaction chamber 40 in any form, such as, but not limited to, liquids, powders, granules, pellets, flakes, and/or the like. Any amount of the metal, the water, and the catalyst may be used.

As described above, in some embodiments, byproduct water from the fuel cell 14 is supplied to the HGS 16 for generating hydrogen. In such embodiments, the water tank 42 holds an initial supply of water that can be supplied to the reactor 38 to initiate the reaction. This initial supply of water may be entirely byproduct water from earlier operation of the fuel cell 14 to generate electrical power, may be water that is added to the water tank from another source before operation of the HGS 16 is initiated, may be a combination thereof, and/or the like. The amount and/or rate of byproduct water produced by the fuel cell 14 may, in some embodiments, be sufficient such that the electrical power unit 10 is a "self-sustaining" process of providing electrical power. Alternatively, the water tank 42 holds a supply of water that supplements the byproduct water such that the reactor 38 is supplied with a sufficient amount of water to generate the amount of hydrogen being demanded by the fuel cell 14. In embodiments wherein byproduct water from the fuel cell 14 is not supplied to the HGS 16, the water tank 42 may hold a sufficient amount of water to generate a predetermined amount of hydrogen or may be supplied with water during operation of the reactor 38 to generate hydrogen.

The HGS 16 may be used to generate any amount of hydrogen at any rate, which may depend on a current or future demand for hydrogen by the fuel cell 14, a current or future amount of electrical power generated by the fuel cell 14, a current or future rate at which electrical power is generated by the fuel cell 14, and/or the like. Various parameters of the HGS 16 may be selected to generate a predetermined amount and/or rate of hydrogen. Examples of such various parameters include, but are not limited to, the amount and/or type of metal used, the amount and/or type of catalyst used, the amount and/or flow rate of water supplied to the reaction chamber 40, and/or the like.

An outlet 52 of the reactor 38 is operatively connected in fluid communication with the hydrogen inlet 18 of the fuel cell 14 for supplying hydrogen generated by the HGS 16 to the fuel cell 14. In the illustrated embodiment, the hydrogen supply tank 34 that receives unused hydrogen from the fuel cell 14 is configured to hold hydrogen generated by the HGS 16. In some alternative embodiments, instead of being held by the hydrogen supply tank 34, the electrical power unit 10 includes a dedicated hydrogen tank for holding hydrogen generated by the HGS 16. In other alternative embodiments, the electrical power unit 10 does not include a tank that holds hydrogen generated by the HGS 16. Hydrogen generated by the HGS 16 may be stored in the hydrogen supply tank 34 or the dedicated hydrogen tank for any amount of time. For example, hydrogen may be supplied to the fuel cell 14 as the hydrogen is being generated by the HGS 16 or hydrogen generated by the HGS 16 may be stored for future use by the fuel cell 14.

As described above, the fuel cell 14 uses the hydrogen generated by the HGS 16 to generate electrical power. The fuel cell 14 generates electrical power using any reaction between hydrogen and oxygen. A catalyst may be used to promote the reaction between the hydrogen and the oxygen. Any suitable catalyst may be used. The reaction between the hydrogen and the metal to generate electrical power is exothermic. Examples of suitable reactions between oxygen and hydrogen include, but are not limited to: 6H₂ + 3O₂ + catalyst = 6H₂O + catalyst + heat, and/or the like. To generate the reaction, the hydrogen, oxygen, and catalyst are supplied to the fuel cell 14 in any order. Any amount of the hydrogen, the oxygen, and the catalyst may be used.

The fuel cell 14 may be used to generate any amount of electrical power at any rate. Various parameters of the fuel cell 14 may be selected to generate a predetermined amount and/or rate of electrical power. Examples of such various parameters include, but are not limited to, the amount, type, and/or flow rate of hydrogen, the amount, type, and/or flow rate of catalyst, the amount, type, and/or flow rate of oxygen and/or the like.

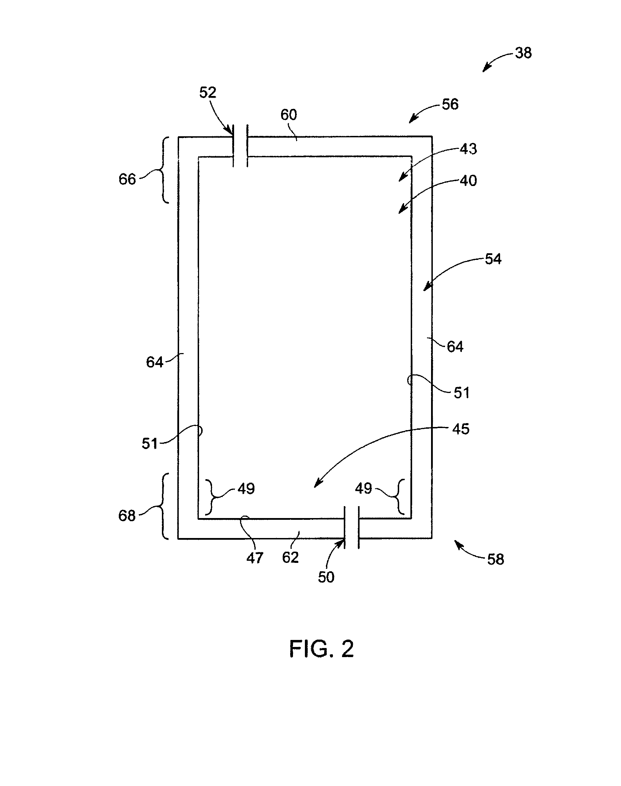

Figure 2 is a schematic view of an embodiment of the reactor 38 of the HGS 16. The reactor 38 includes a body 54 that extends from a top end 56 to an opposite bottom end 58. The top end 56 includes a top wall 60. The bottom end 58 includes a bottom wall 62. The body 54 includes one or more side walls 64 that extend from the top wall 60 to the bottom wall 62. The top end 56 includes the top wall 60 and a portion 66 of the side wall 64 that intersects the top wall 60. The bottom end 58 includes the bottom wall 62 and a portion 68 of the side wall 64 that intersects the bottom wall 62. The reactor 38 includes the inlet 50 and the outlet 52, each of which extends through the body 54 into fluid communication with the reaction chamber 40, as can be seen in Figure 2. The reaction chamber 40 includes a top 43 and a bottom 45. The bottom 45 includes an interior surface 47 of the bottom wall 62 and portions 49 of interior surfaces 51 of the side walls 64 that intersects the interior surface 47. The inlet 50 and/or the outlet 52 may include various flow control features (not shown), such as, but not limited to, valves, restrictors, blowouts, manual shutoffs, automatic shutoffs, and/or the like.

The reaction chamber 40 is configured to receive water at the bottom 45 thereof such that the reaction between the water and the metal begins at the bottom 45 of the reaction chamber 40. In the illustrated embodiment, the reaction chamber 40 is configured to receive water at the bottom end 58 of the body 54. Specifically, the inlet 50 extends through the bottom end 58 of the body 54 such that the reaction chamber 40 is configured to receive water through the bottom end 58. In other words, water is supplied to the reactor 38 through the bottom end 58 of the reactor 38. The water supplied to the reactor 38 through the bottom end 58 reacts with the metal at the bottom 45 of the reaction chamber 40. In the illustrated embodiment, the inlet 50 extends through the bottom wall 62 such that the reaction chamber 40 is configured to receive water through the bottom wall 62. Alternatively, the inlet 50 extends through the portion 68 of the side wall 64 that is included as a portion of the bottom end 58, such that the reaction chamber 40 is configured to receive water through the side wall portion 68 of the bottom end 58. Moreover, in some alternative embodiments, the inlet 50 extends through the top end 56 and includes a conduit (not shown) that extends through the reaction chamber 40 toward the bottom 45 such that the water is introduced into the reaction chamber 40 at the bottom 45. In other alternative embodiments, the inlet extends through the top end 56 and directs the water onto the interior surfaces 51 of the side walls 64 such that the water runs down the interior surfaces 51 to the bottom 45 of the reaction chamber 40.

The metal may be preloaded into the reaction chamber 40 of the reactor 38 before the water is supplied to the reaction chamber 40. The water is thereafter supplied to the bottom 45 of the reaction chamber 40 through the inlet 50. If a catalyst is used, the catalyst may be preloaded with the metal or may be mixed with the water before, or as, the water is supplied to the reaction chamber 40. Because the metal is preloaded and the water is supplied to the bottom 45 of the reaction chamber 40 such that the reaction between the water and the metal begins at the bottom 45, the reaction between the metal and the water is "self-sealed". The self-sealed nature of the reaction may simplify and/or reduce the cost of the design and manufacture of the reactor 38. Moreover, the self-sealed nature of the reaction may enable a relatively controllable, a relatively steady, and a relatively consistent rate of hydrogen generation.

Figure 3 is a schematic illustration of an embodiment of an aircraft 100 that includes an electrical power unit 110 that provides electrical power in a substantially similar manner to the electrical power unit 10 (Figure 1). In the illustrated embodiment, the aircraft 100 is a fixed wing passenger airplane. The aircraft 100 includes a plurality of electrical components 112, an airframe 170, a primary power unit 172, an auxiliary power unit (APU) 174, one or more engines 176, and the electrical power unit 110. The electrical components 112, the power units 172 and 174, the engine system 176, and the electrical power unit 110 are each located on-board the airframe 170. Specifically, the electrical components 112, the power units 172 and 174, the engine system 176, and the electrical power unit 110 are positioned at various locations on and/or within the airframe 170 such that the electrical components 112, the power units 172 and 174, the engine system 176, and the electrical power unit 110 are carried by the airframe 170 during flight of the aircraft 100.

In the illustrated embodiment, the electrical power unit 110 is an EPU of the aircraft 100, for example that is used when both the primary electrical power source 172 and the auxiliary electrical power source 174 have completely or partially failed. Alternatively, the electrical power unit 110 is the APU of the aircraft 100, which is used when the primary power unit 172 completely or partially fails. It should be understood that whether the electrical power unit 110 is an EPU or APU, the electrical power unit 110 may be configured to provide electrical power to one or more electrical components 112 in non-emergency situations.

The primary power unit 172 may be any type of source of electrical power, for example a generation device or a storage device. In the illustrated embodiment, the primary power unit 172 is a turbine generator associated with an engine 176 of the aircraft 100. Other examples of the primary power unit 172 as a generation device include, but are not limited to, electrical generators and/or solar cells, among others. Examples of the primary power unit 172 as a storage device include, but are not limited to, fuel cells, batteries, flywheels, and/or capacitors, among others. Although shown as being located at an engine 176 of the aircraft 100, the primary power unit 172 may be located at any other location along the airframe 170. Moreover, the aircraft 100 may include any number of the primary power units 172.

The APU 174 may be any type of source of electrical power, for example a generation device or a storage device. In the illustrated embodiment, the APU 174 is a storage device. Examples of the APU 174 as a storage device include, but are not limited to, fuel cells, batteries, flywheels, and/or capacitors, among others. Examples of the APU 174 as a generation device include, but are not limited to, turbine generators, electrical generators, and/or solar cells, among others. The APU 174 may be located at any location along the airframe 170. The aircraft 100 may include any number of the APUs 174.

Sub-sets 178 of the electrical components 112 are shown in Figure 3 at various locations along the airframe 170. Each sub-set 178 may include any number of electrical components 112. In some embodiments, one or more sub-sets 178 only include a single electrical component 112. When a sub-set 178 includes two or more electrical components 112, all of the electrical components 112 of the sub-set 178 may be of the same type or the sub-set 178 may include two or more different types of electrical components 112. The aircraft 100 may include any number of the sub-sets 178.

The locations and pattern of sub-sets 178 along the airframe 170 shown in Figure 3 are for example only. Each sub-set 178 may have any other location along the airframe 170 and the sub-sets 178 may be arranged in any other pattern relative to each other. Moreover, the electrical components 112 of the same sub-set 178 are shown in Figure 3 as grouped together at the same location along the airframe 170 for illustrative purposes only. The electrical components 112 of the same sub-set 178 need not be located at the same location along the airframe 170. Rather, each electrical component 112 may have any location along the airframe 170, whether or not such location is the same, or adjacent to, the location of one or more other electrical components 112 of the same sub-set 178. In some embodiments, the electrical components are grouped together in the sub-sets 122 based on corresponding power distribution modules (not shown) that are common to groups (i.e., the sub-sets 178) of the electrical components 112.

Each electrical component 112 of each sub-set 178 may be any type of electrical component. Examples of the electrical components 112 include, but are not limited to, flight controls, linked hydraulics, avionics, displays, instruments, sensors, galley ovens, heaters, refrigeration units, lighting, fans, de-ice and anti-ice systems, engine management systems, flight management systems, power distribution components, starters, starter-generators, environmental controls, pressurization systems, entertainment systems, microwaves, weapon systems, cameras, signal processors, power distribution components, capacitors, and/or electrical components that process, transmit, and/or relay data, among others.

The sub-sets 178 are electrically connected to the primary power unit 172, the APU 174, and the electrical power unit 110 such that each electrical component 112 is configured to receive electrical power from the primary power unit 172, the APU 174, and/or the electrical power unit 110. In the illustrated embodiment, each electrical component 112 of each sub-set 178 is electrically connected to each of the units 172, 174, and 110. In other words, each unit 172, 174, and 110 is configured to supply electrical power to all of the electrical components 112. Alternatively, one or more of the electrical components 112 may not be electrically connected to the primary power unit 172, the APU 174, or the electrical power unit 110. In other words, in some alternative embodiments, the primary power unit 172, the APU 174, and/or the electrical power unit 110 only supply electrical power to some of the electrical components 112. For example, the APU 174 and/or the electrical power unit 110 may only be electrically connected to electrical components 112 that are required during emergency situations (e.g., electrical components 112 that are critical and/or vital to safe operation of the aircraft 100, such as, but not limited to, flight controls, instruments, linked hydraulics, avionics, displays, sensors, lighting, de-ice and anti-ice systems, engine management systems, flight management systems, environmental controls, pressurization systems, and/or weapon systems, among others).

Referring now to the electrical power unit 110, the electrical power unit 110 includes a fuel cell 114 and a hydrogen generation system (HGS) 116. The HGS 116 is configured to generate hydrogen using a reaction between water and metal in a substantially similar manner to that described above with respect to the HGS 16 (Figure 1). The fuel cell 114 is configured to generate electrical power using hydrogen in a substantially similar manner to that described above with respect to the fuel cell 14 (Figure 1). The HGS 116 is fluidly connected to the fuel cell 114 such that the HGS 116 is configured to supply hydrogen generated by the HGS 116 to the fuel cell 114.

Operation of the electrical power unit 110 to provide electrical power to the electrical components 112 will now be described. The HGS 116 generates hydrogen using a reaction between metal and water. Hydrogen generated by the HGS 116 is supplied to the fuel cell 114. The fuel cell 114 generates electrical power using a reaction between oxygen and the hydrogen generated by the HGS 116. The electrical power generated by the fuel cell 114 can be immediately delivered to the electrical components 112 that are electrically connected to the electrical power unit 110 or can be stored for later delivery to the electrical components 112. In some embodiments, byproduct water from the fuel cell 114 is supplied to the HGS 116 for generating the hydrogen.

In some embodiments, the electrical power unit 110 is electrically connected to the primary power unit 172 and/or the APU 174. Electrical connection of the electrical power unit 110 to the primary power unit 172 and/or the APU 174 may enable the electrical power unit 110 to supplement the primary power unit 172 and/or the APU 174 during non-emergency situations. For example, whether or not the primary power unit 172 and/or the APU 174 has failed, the electrical power unit 110 may provide electrical power to one or more electrical components 112 that are supplied with electrical power from the primary power unit 172 and/or the APU 174 during non-emergency situations. Moreover, and for example, the electrical power unit 110 may provide additional electrical power to one or more electrical components 112 being supplied with electrical power from the primary power unit 172 and/or the APU 174. In addition or alternative to being electrically connected to the primary power unit 172 and/or the APU 174, the electrical power unit 10 may supplement the primary power unit 172 and/or the APU 174 by being separately electrically connected to one or more electrical components 112 that are supplied with electrical power from the primary power unit 172 and/or the APU during non-emergency situations.

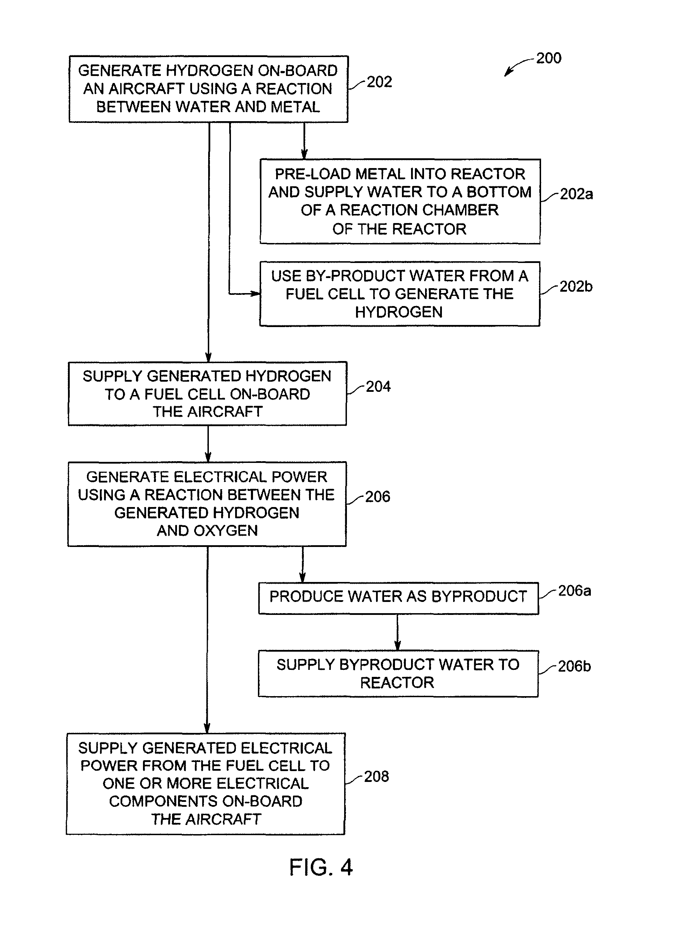

Figure 4 is a flowchart illustrating an embodiment of a method 200 for providing electrical power on-board an aircraft (e.g., the aircraft 100 shown in Figure 3). For example, the method 200 may be performed using the electrical power unit 10 (Figure 1) or the electrical power unit 110 (Figure 3). The method 200 includes, at 202, generating hydrogen on-board the aircraft using a reaction between water and metal. In some embodiments, generating at 202 includes, at 202a, preloading the metal into a reactor (e.g., the reactor 38 shown in Figures 1 and 2) and thereafter supplying the water to a bottom of a reaction chamber of the reactor (e.g., through a bottom end of the reactor). Moreover, generating at 202 may include using, at 202b, byproduct water from a fuel cell (e.g., the fuel cell 14 shown in Figure 1 or the fuel cell 114 shown in Figure 3) to generate the hydrogen. In some embodiments, generating at 202 includes combining water, metal, and a catalyst to create an exothermic reaction having a temperature range of between approximately 15 °C and approximately 280 °C.

At 204, the method 200 includes supplying the generated hydrogen to a fuel cell on-board the aircraft. At 206, the method 200 includes generating electrical power at the fuel cell using a reaction between the generated hydrogen and oxygen. In some embodiments, generating electrical power at 206 includes producing water as a byproduct at 206a and supplying at 206b the byproduct water to the reactor for use in generating more hydrogen. In some embodiments, generating at 206 comprises re-circulating at least one of unused hydrogen and unused oxygen to the fuel cell. At 208, the method 200 includes supplying the generated electrical power from the fuel cell to one or more electrical components (e.g., the electrical component 12 shown in Figure 1 or the electrical components 112 shown in Figure 3) on-board the aircraft.

Various embodiments of systems and methods are provided for providing electrical power. At least one beneficial effect of various embodiments is an electrical power unit that provides a controlled rated output power for the duration of use. At least one beneficial effect of various embodiments is an electrical power unit that provides more flexible deployment closer to the actual loads that use the power supplied by the electrical power unit. At least one beneficial effect of various embodiments is an electrical power unit that uses traditional commodity metals and water as feedstock for generating hydrogen, which may be relatively easy to handle, may be widely adopted, and/or may be cost-effective. At least one beneficial effect of various embodiments is an electrical power unit that promotes multiple suppliers, which may reduce a cost of the electrical power unit.

It should be noted that the various embodiments may be implemented in hardware, software or a combination thereof. The various embodiments and/or components, for example, the modules, or components and controllers therein, also may be implemented as part of one or more computers or processors. The computer or processor may include a computing device, an input device, a display unit and an interface, for example, for accessing the Internet. The computer or processor may include a microprocessor. The microprocessor may be connected to a communication bus. The computer or processor may also include a memory. The memory may include Random Access Memory (RAM) and Read Only Memory (ROM). The computer or processor further may include a storage device, which may be a hard disk drive or a removable storage drive such as a solid state drive, optical disk drive, and the like. The storage device may also be other similar means for loading computer programs or other instructions into the computer or processor.

As used herein, the term "computer" or "module" may include any processor-based or microprocessor-based system including systems using microcontrollers, reduced instruction set computers (RISC), ASICs, logic circuits, and any other circuit or processor capable of executing the functions described herein. The above examples are exemplary only, and are thus not intended to limit in any way the definition and/or meaning of the term "computer".

The computer or processor executes a set of instructions that are stored in one or more storage elements, in order to process input data. The storage elements may also store data or other information as desired or needed. The storage element may be in the form of an information source or a physical memory element within a processing machine.

The set of instructions may include various commands that instruct the computer or processor as a processing machine to perform specific operations such as the methods and processes of the various embodiments of the invention. The set of instructions may be in the form of a software program. The software may be in various forms such as system software or application software and which may be embodied as a tangible and non-transitory computer readable medium. Further, the software may be in the form of a collection of separate programs or modules, a program module within a larger program or a portion of a program module. The software also may include modular programming in the form of object-oriented programming. The processing of input data by the processing machine may be in response to operator commands, or in response to results of previous processing, or in response to a request made by another processing machine.

As used herein, the terms "software" and "firmware" are interchangeable, and include any computer program stored in memory for execution by a computer, including RAM memory, ROM memory, EPROM memory, EEPROM memory, and nonvolatile RAM (NVRAM) memory. The above memory types are exemplary only, and are thus not limiting as to the types of memory usable for storage of a computer program.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the invention without departing from its scope. Dimensions, types of materials, orientations of the various components, and the number and positions of the various components described herein are intended to define parameters of certain embodiments, and are by no means limiting and are merely exemplary embodiments. Many other embodiments and modifications within the spirit and scope of the claims will be apparent to those of skill in the art upon reviewing the above description. The scope of the invention should, therefore, be determined with reference to the appended claims, along with the full scope of equivalents to which such claims are entitled. In the appended claims, the terms "including" and "in which" are used as the plain-English equivalents of the respective terms "comprising" and "wherein." Moreover, in the following claims, the terms "first," "second," and "third," etc. are used merely as labels, and are not intended to impose numerical requirements on their objects.

Various aspects and embodiments of the present invention are defined by the following numbered clauses:
1. An electrical power unit for providing electrical power to an electrical component on-board an aircraft, the electrical power unit comprising:
   a hydrogen generation system configured to be positioned on-board the aircraft, the hydrogen generation system being further configured to generate hydrogen using a reaction between water and metal; and
   a fuel cell configured to be positioned on-board the aircraft, the fuel cell being operatively connected to the hydrogen generation system such that the fuel cell receives hydrogen from the hydrogen generation system, the fuel cell being further configured to generate electrical power from the hydrogen received from the hydrogen generation system and to be electrically connected to the electrical component for supplying the component with electrical power.
2. The electrical power unit of clause 1, wherein the hydrogen generation system comprises a reactor, a water tank, and a pump, the pump being operatively connected with the reactor and the water tank for pumping water from the water tank into the reactor.
3. The electrical power unit of any preceding clause, wherein the electrical power unit is one of an emergency power unit (EPU) or an auxiliary power unit (APU) of the aircraft.
4. The electrical power unit of any preceding clause, wherein the fuel cell produces water as a byproduct of the generation of electrical power using the hydrogen received from the hydrogen generation system, the hydrogen generation system being fluidly connected to the fuel cell such that the hydrogen generation system is configured to receive water from the fuel cell.
5. The electrical power unit of any preceding clause, wherein the hydrogen generation system comprises a reactor having a reaction chamber that includes a bottom, the reaction chamber being configured to receive water at the bottom of the reaction chamber such that the reaction between the water and the metal begins at the bottom of the reaction chamber.
6. The electrical power unit of any preceding clause, wherein the hydrogen generation system comprises a reactor having a top end and an opposite bottom end, the reactor being configured to receive water at the bottom end through an inlet that extends through the top end.
7. The electrical power unit of any preceding clause, further comprising a controller operatively connected to at least one of the hydrogen generation system or the fuel cell, the controller being configured to control operation of at least one of the hydrogen generation system or the fuel cell.
8. A method for providing electrical power on-board an aircraft, the method comprising:
   generating hydrogen on-board the aircraft using a reaction between water and metal;
   supplying the generated hydrogen to a fuel cell on-board the aircraft; and generating electrical power at the fuel cell using the generated hydrogen.
9. The method of any preceding clause, further comprising supplying the generated electrical power from the fuel cell to an electrical component on-board the aircraft.
10. The method of any preceding clause, wherein generating hydrogen on-board the aircraft using a reaction between water and metal comprises combining the water with the metal and a catalyst to create an exothermic reaction having a temperature range of between approximately 15 °C and approximately 280 °C.
11. The method of any preceding clause, wherein generating hydrogen on-board the aircraft using a reaction between the water and metal comprises supplying the metal to a reactor as at least one of powder, liquid, granules, pellets, or flakes.
12. The method of any preceding clause, further comprising supplying the generated electrical power from the fuel cell to an electrical component on-board the aircraft that is at least one of critical or vital to safe operation of the aircraft.
13. The method of any preceding clause, wherein generating hydrogen on-board the aircraft using a reaction between water and metal comprises preloading the metal into a reactor and thereafter supplying the water to the reactor.
14. The method of any preceding clause, wherein generating hydrogen on-board the aircraft using a reaction between water and metal comprises supplying the water to a bottom of a reaction chamber such that the reaction between the water and the metal begins at the bottom of the reaction chamber.
15. The method of any preceding clause, wherein generating electrical power at the fuel cell using the generated hydrogen comprises producing water as a byproduct, and generating hydrogen on-board the aircraft using a reaction between water and metal comprises supplying the byproduct water to a reactor and using the byproduct water to generate the hydrogen.
16. The method of any preceding clause, wherein generating electrical power at the fuel cell using the generated hydrogen comprises using a reaction between the generated hydrogen and oxygen.
17. The method of any preceding clause, wherein generating electrical power at the fuel cell using the generated hydrogen comprises re-circulating at least one of unused hydrogen and unused oxygen to the fuel cell.
18. An aircraft comprising:
   an airframe;
   an electrical component on-board the airframe;
   a hydrogen generation system on-board the airframe, the hydrogen generation system being configured to generate hydrogen using a reaction between water and metal; and
   a fuel cell on-board the airframe, the fuel cell being operatively connected to the hydrogen generation system such that the fuel cell receives hydrogen from the hydrogen generation system, the fuel cell being configured to generate electrical power from the hydrogen received from the hydrogen generation system, the fuel cell being electrically connected to the electrical component for supplying the component with electrical power.
19. The aircraft of any preceding clause, wherein the fuel cell is one of an emergency power unit (EPU) or an auxiliary power unit (APU) of the aircraft.
20. The aircraft of any preceding clause, wherein the fuel cell is electrically connected to at least one of a primary power unit or an auxiliary power unit (APU) of the aircraft.

## Claims

1. An electrical power unit (10) for providing electrical power to an electrical component (12) on-board an aircraft (100), the electrical power unit comprising:
a hydrogen generation system (16) configured to be positioned on-board the aircraft, the hydrogen generation system being further configured to generate hydrogen using a reaction between water and metal; and
a fuel cell (14) configured to be positioned on-board the aircraft, the fuel cell being operatively connected to the hydrogen generation system such that the fuel cell receives hydrogen from the hydrogen generation system, the fuel cell being further configured to generate electrical power from the hydrogen received from the hydrogen generation system and to be electrically connected to the electrical component for supplying the component with electrical power.

2. The electrical power unit (10) of claim 1, wherein the hydrogen generation system (16) comprises a reactor (38), a water tank (42), and a pump (46), the pump being operatively connected with the reactor and the water tank for pumping water from the water tank into the reactor.

3. The electrical power unit (10) of either of claim 1 or 2, wherein the electrical power unit is one of an emergency power unit (EPU) or an auxiliary power unit (APU) of the aircraft.

4. The electrical power unit (10) of any one of the preceding claims, wherein the fuel cell (14) produces water as a byproduct of the generation of electrical power using the hydrogen received from the hydrogen generation system (16), the hydrogen generation system being fluidly connected to the fuel cell such that the hydrogen generation system is configured to receive water from the fuel cell.

5. The electrical power unit (10) of any one of the preceding claims, wherein the hydrogen generation system (16) comprises a reactor (38) having a reaction chamber (40) that includes a bottom (45), the reaction chamber being configured to receive water at the bottom of the reaction chamber such that the reaction between the water and the metal begins at the bottom of the reaction chamber.

6. The electrical power unit (10) of any one of claims 1 to 4, wherein the hydrogen generation system (16) comprises a reactor (38) having a top end (56) and an opposite bottom end (58), the reactor being configured to receive water at the bottom end through an inlet (50) that extends through the top end.

7. The electrical power unit (10) of any one of the preceding claims, further comprising a controller (48) operatively connected to at least one of the hydrogen generation system (16) or the fuel cell (14), the controller being configured to control operation of at least one of the hydrogen generation system or the fuel cell.

8. A method (200) for providing electrical power on-board an aircraft (100), the method comprising:
generating (202) hydrogen on-board the aircraft using a reaction between water and metal;
supplying (204) the generated hydrogen to a fuel cell (14) on-board the aircraft; and
generating (206) electrical power at the fuel cell (14) using the generated hydrogen.

9. The method (200) of claim 8, further comprising supplying (208) the generated electrical power from the fuel cell (14) to an electrical component (12) on-board the aircraft (100).

10. The method (200) of either of claim 8 or 9, wherein generating (202) hydrogen on-board the aircraft (100) using a reaction between water and metal comprises combining the water with the metal and a catalyst to create an exothermic reaction having a temperature range of between approximately 15 °C and approximately 280 °C.

11. The method (200) of any one of claims 8 to 10, wherein generating (202) hydrogen on-board the aircraft (100) using a reaction between the water and metal comprises supplying the metal to a reactor (38) as at least one of powder, liquid, granules, pellets, or flakes.

12. The method (200) of any one of claims 8 to 11, further comprising supplying (208) the generated electrical power from the fuel cell (14) to an electrical component (12) on-board the aircraft (100) that is at least one of critical or vital to safe operation of the aircraft.

13. The method (200) of any one of claims 8 to 12, wherein generating (202) hydrogen on-board the aircraft (100) using a reaction between water and metal comprises preloading (202a) the metal into a reactor (38) and thereafter supplying the water to the reactor.

14. The method (200) of any one of claims 8 to 13, wherein generating (202) hydrogen on-board the aircraft (100) using a reaction between water and metal comprises supplying (202a) the water to a bottom of a reaction chamber (38) such that the reaction between the water and the metal begins at the bottom of the reaction chamber.

15. The method (200) of any one of claims 8 to 14, wherein generating (206) electrical power at the fuel cell (14) using the generated hydrogen comprises producing (206a) water as a byproduct, and generating (202) hydrogen on-board the aircraft (100) using a reaction between water and metal comprises supplying (206b) the byproduct water to a reactor (38) and using the byproduct water to generate the hydrogen.
